# EUROPÄISCHE PATENTSCHRIFT

(11) **EP 0 698 183 B1**
(45) Veröffentlichungstag und Bekanntmachung des Hinweises auf die Patenterteilung: **26.11.1997**
(21) Anmeldenummer: 94916952.8
(22) Anmeldetag: 13.05.1994
(51) Int. Cl.: F04B 17/03, H02K 7/14, H02K 7/08

(54) **ELEKTROMOTOR-PUMPEN-AGGREGAT**
ELECTROMOTOR-PUMP ASSEMBLY
ENSEMBLE POMPE ET MOTEUR ELECTRIQUE

(30) Priorität: 12.05.1993 DE 4315826; 17.06.1993 DE 4320005; 17.09.1993 DE 4331625; 17.09.1993 DE 4331626
(43) Veröffentlichungstag der Anmeldung: 28.02.1996
(73) Patentinhaber: ITT Automotive Europe GmbH, 60488 Frankfurt (DE)
(72) Erfinder: BURGDORF, Jochen, D-63075 Offenbach (DE); VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9401525
(87) Internationale Veröffentlichungsnummer: WO9427045

(56) Entgegenhaltungen:
- DE-A- 1 751 954
- DE-A- 2 360 182
- DE-A- 3 941 442
- DE-A- 4 118 950
- DE-A- 4 132 609

## Beschreibung

Die Erfindung bezieht sich auf ein Aggregat bestehend aus einem Elektromotor und einer Pumpe. Bei der Pumpe handelt es sich vorzugsweise um eine Kolbenpumpe, deren Kolben von einem Exzenter der Motorwelle angetrieben werden. Das Aggregat besteht aus einem Gehäuse für den elektrischen Motor und einem Gehäuse für die Pumpe. In dem Motorgehäuse ist eine Ankerwelle angeordnet, die in Lager (Hauptlager) am einen Ende des Gehäuses in einem Lagerschild gelagert ist. An diesem Ende tritt die Ankerwelle aus dem Gehäuse heraus. Das herausragende Ende weist ein Antriebselement auf, das mit dem Pumpenkolben in Eingriff steht, wenn das Motorgehäuse und das Gehäuse für das anzutreibende Element miteinander verbunden sind. Das Hauptlager wird vom Motorgehäuse gehalten.

Ein derartiges Aggregat ist z.B. aus der DE-OS 41 18 950 bekannt. Bei dem dort dargestellten Aggregat handelt es sich um ein Motorpumpenaggregat. Das herausragende Ende der Welle ist nicht weiter abgestützt, so daß die Druckkräfte, die auf die Kolben der Pumpe ausgeübt und auf die Ankerwelle übertragen werden, lediglich vom Hauptlager abgestützt werden. Aus der DE-OS 23 60 182 ist bekannt, die Welle an ihrem aus dem Motorgehäuse herausragenden Ende auf beiden Seiten des Antriebselements zu lagern (Hauptlager, Pumpenlager), um die Kräfte, die auf das Antriebselement wirken, gut abstützen zu können. Gleichzeitig wird in der Schrift vorgeschlagen, für das andere Ende der Welle auf eine Lagerung zu verzichten.

Würde man die in der DE-OS 23 60 182 vorgeschlagene Anordnung auf die Anordnung gemäß DE-OS 41 18 930 übertragen, so führt dies zu einem Aggregat mit dem Nachteil, daß die Lager fest mit dem Gehäuse des anzutreibenden Elementes verbunden sind, der Elektromotor nur dann in seiner Funktionstüchtigkeit überprüft werden kann, wenn die beiden Gehäuse miteinander verbunden sind.

Es ist daher Aufgabe der Erfindung, das Aggregat so auszubilden, daß im Normalbetrieb die Welle ausreichend abgestützt ist und daß ein Probebetrieb (Testphase) des Elektromotors, bei dem das Gehäuse des Motors mit dem Gehäuse des anzutreibenden Elementes (Pumpengehäuse) nicht verbunden ist, möglich ist.

Dazu ist das Hauptlager mit dem Motorgehäuse verbunden, stützt sich aber in radialer Richtung im wesentlichen am Gehäuse des anzutreibenden Elementes an, sobald die beiden Gehäuse miteinander verbunden sind.

Dies kann einerseits dadurch geschehen, daß das Hauptlager nur zum Teil in eine Vertiefung am Motorgehäuse steckt und bei der Zusammenführung der beiden Gehäuse in eine gegenüberliegende Vertiefung des Gehäuses des anzutreibenden Elementes eingesteckt wird.

Dies hat den Vorteil, daß das Lagerschild, das das Motorgehäuse verschließt und das Hauptlager hält, aus Kunststoff hergestellt werden kann.

Im Normalbetrieb werden nämlich die Kräfte, die auf das Hauptlager wirken, auf das Gehäuse des anzutreibenden Elements geleitet. Im Probebetrieb treten keine so großen Kräfte auf, so daß es ausreicht, wenn das Hauptlager von einem Kunststoff schild gehalten wird.

Das Gehäuse kann aber auch eine in das Gehäuseinnere hinein sich öffnende Vertiefung aufweisen, in der das Hauptlager angeordnet ist. Diese Vertiefung entspricht einer Erhöhung nach außen, die in eine entsprechende Vertiefung des Gehäuses für das anzutreibende Element einsteckbar ist. Auf diese Weise wird ebenfalls erreicht, daß die Lagerkräfte letztlich am Gehäuse des anzutreibenden Elements abgestützt werden, sobald die Gehäuse zusammengesteckt sind.

Ein Hilfslager im Boden des Elektromotorgehäuses kann je nach den vorgesehenen Einsatzbedingungen berücksichtigt werden.

Aus der DE 41 32 609 Al ist bereits ein Elektromotor zum Antrieb einer Radialkolbenpumpe hervorgegangen, dessen Welle innerhalb eines zweiteilig ausgeführten Elektromotorengehäuses gelagert ist. Die Lagerung der Welle ist als Einpunktlager ausgeführt, weshalb zur Aufnahme der Lagerkräfte die Lagerbreite erheblich größer gewählt ist als der Nenndurchmesser der Welle. Die elektrischen Anschlußkomponenten des Elektromotors werden über eine Öffnung im topfförmigen Gehäuse des Ständers (des Elektromotors) nach außen geführt.

Durch die relativ große Lagerbreite verlängert sich der Gehäusebund des zweiteiligen Elektromotorengehäuses erheblich. Hierdurch läßt sich die Baulänge und das Gewicht nicht weiter reduzieren. Ein weiterer Nachteil ergibt sich durch die externe Verlegung der elektrischen Anschlüsse, die eine sorgfältige Abdichtung und Befestigung erfordern.

Daher ist es eine weitere Aufgabe der Erfindung, unter Verwendung einfacher Mittel eine uneingeschränkt betriebssichere, klein- und kurzbauende sowie geräuscharme Maschine zu verwirklichen, die unabhängig vom Antriebs- bzw. Abtriebsaggregat einer Funktionsprüfung unterzogen werden kann.

Dazu wird vorgeschlagen, daß zwischen der Lagerung der Antriebs- oder Abtriebsseite der Welle und dem Pumpengehäuse ein Stützgehäuse vorgesehen ist, das das auf der Welle verschiebbare Pumpenlager in einem Sackloch des Stützgehäuses fixiert, sowie ein auf der Welle gegenüber dem Pumpenlager beabstandetes Hauptlager aufnimmt, wodurch der Kraftfluß zwischen der Wellenlagerung im Pumpengehäuse und dem Elektromotorengehäuse geschlossen ist.

Es hat sich gezeigt, daß zur sicheren Befestigung des Hauptlagers im Gehäuse des Pumpengehäuses sehr enge Passungstoleranzen eingehalten werden müssen, die zu unterschiedlichen Montagekräften führen. Als weiterer Nachteil sind die fehlenden Fixierhilfen zur exakten Positionierung des Hauptlagers im Gehäuse zu nennen, damit die erforderliche Einbautiefe der Welle im Pumpengehäuse eingehalten werden kann.

Daher liegt der Erfindung die weitere Aufgabe zugrunde, einen Elektromotor derart weiter zu entwickeln, daß unter Umgehung der vorgenannten Nachteile eine präzise, leicht einzustellende und zu montierende Wellenlagerung ermöglicht wird.

Diese Aufgabe wird dadurch gelöst, daß das Lagerschild eine Öffnung aufweist, deren Innendurchmesser kleiner ist als der Außendurchmesser des Hauptlagers und wobei das Lagerschild zwischen dem Hauptlager und dem Elektromotorengehäuse angeordnet ist.

Es ist eine weitere Aufgabe der Erfindung, einen Elektromotor dahingehend zu verbessern, daß unter Verwendung einfacher Mittel ein uneingeschränkt betriebssicheres, klein- und kurzbauendes sowie geräuscharmes Aggregat verwirklicht werden kann.

Diese Aufgabe wird dadurch gelöst, daß das der Antriebs- bzw. der Abtriebsseite entgegengesetzte Ende der Welle frei von Lagerkräften rotiert und wobei die Lagerung der Antriebs- bzw. der Abtriebsseite der Welle im Pumpengehäuse erfolgt und zwischen dem Elektromotor und dem Pumpengehäuse eine Trägerplatte (Lagerschild) eingespannt ist.

Die Erfindung sowie ihre Ausgestaltungn wird im folgenden anhand von 12 Figuren erläutert.

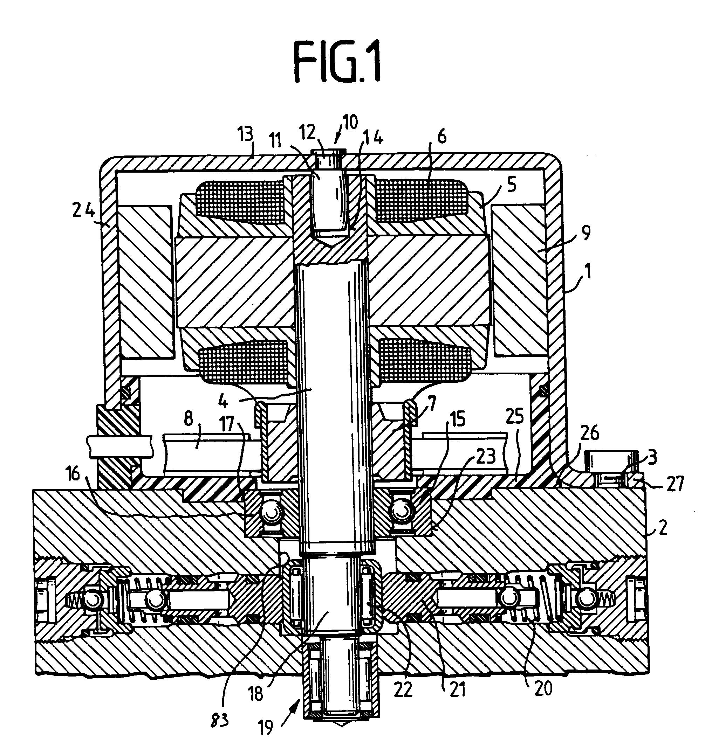

Fig. 1 zeigt ein Motorpumpenaggregat im Schnitt. Es besteht aus einem Motorgehäuse 1 und einem Pumpengehäuse 2. Diese sind durch Schrauben 3, von denen eine gezeigt ist, miteinander verbunden. Durch beide Gehäuse hindurch erstreckt sich eine Ankerwelle 4. Das Motorgehäuse 1 ist im wesentlichen symmetrisch zur Ankerwelle 4 ausgebildet. Bei dem Pumpengehäuse 2 handelt es sich um einen Block mit mehreren Bohrungen, die u.a. auch Pumpenkolben enthalten. Es können aber auch (hier nicht dargestellte) Ventile in dem Pumpengehäuse 2 vorgesehen sein, mit deren Hilfe eine Steuerung des durch die Pumpe hervorgerufenen Druckmittelstroms bewirkt wird.

Innerhalb des Motorgehäuses 1 trägt die Ankerwelle 4 einen Anker 5 mit Wicklungen 6. Weiterhin ist ein Kollektor 7 vorgesehen, über den die Wicklungen 6 mit Strom versorgt werden. Bürsten 8 kontaktieren den Kollektor 7. Die Bürsten 8 sind am Lagerschild des Motorgehäuses 1 befestigt. Im Motorgehäuse angeordnet sind Permanentmagnete 9, die in Wechselwirkung mit den durch die Wicklungen 6 erzeugten Magnetfelder den Motor antreiben.

Die Welle 4 ist in drei Punkten gelagert. Das erste Lager oder Hilfslager 10 besteht aus einem tonnenförmigen Zapfen 11, der mittels einer Niet 12 am Boden 13 des Motorgehäuses 1 befestigt ist, der dem Pumpengehäuse 2 abgewandt ist. Der Zapfen 11 erstreckt sich axial in den Innenraum des Motorgehäuses 1 hinein.

Die Ankerwelle 4 weist eine Sackbohrung 14 auf, die axial zur Ankerwelle 4 verläuft und sich zu der Stirnseite der Ankerwelle 4 hin öffnet, die dem Boden 13 gegenüberliegt. Der Zapfen 11 ragt in diese Sackbohrung 14 hinein, wobei der Außendurchmesser des Zapfens 11 etwas kleiner ist als der Innendurchmesser der Sackbohrung 14. Auf diese Weise ist ein einfaches Hilfslager 10 realisiert. Auf dieses Lager kann ggf. verzichtet werden.

Das zweite Lager oder Hauptlager 15 ist in diesem Ausführungsbeispiel als Kugellager realisiert. Der äußere Lagerring 16 des Kugellagers steckt in einer Ausnehmung 17 im Motorgehäuse 1 bzw. im Lagerschild 25, die sich nach außen hin öffnet. Die Ausnehmung ist nicht sehr tief, so daß das Lager 15 über den größeren Teil seiner Länge aus dem Motorgehäuse 1 herausragt. Durch das Hauptlager 15 hindurch reicht die Ankerwelle 4 nach außen und weist an ihrem herausragenden Ende einen Pumpenexzenter 18 auf. Noch weiter außen ist die Ankerwelle 4 in einem weiteren Lager (Pumpenlager 19) gehalten. Dieses Lager ist in diesem Ausführungsbeispiel als Nadellager ausgebildet. Es befindet sich vollständig in einer Bohrung im Pumpengehäuse 2. Kräfte auf dieses Lager werden vollständig vom Pumpengehäuse aufgenommen.

In dem Pumpengehäuse befinden sich quer zur Ankerwelle 4 Bohrungen 20, in denen Pumpenkolben 21 geführt sind. Die Pumpenkolben 21 bilden in bekannter Weise zusammen mit Ein- und Auslaßventilen eine Pumpe. Die Kolben 21 sind über ein Nadellager 22 an dem Pumpenexzenter 18 der Ankerwelle 4 abgestützt. Die drehende Ankerwelle 4 versetzt die Kolben mittels des Pumpenexzenters 18 in eine Hin- und Herbewegung.

Das Pumpengehäuse weist eine Vertiefung 23 bzw. erste Stufe auf, die, wenn Motorgehäuse 1 und Pumpengehäuse 2 miteinander verbunden sind, der Ausnehmung 17 am Motorgehäuse 1 gegenüberliegt. Das Hauptlager 15 wird in der Ausnehmung 17 bzw. der Vertiefung 23 gehalten, wobei aber das Hauptlager 2 über einen wesentlich größeren Teil seiner Länge im Pumpengehäuse 2 steckt, so daß Kräfte, die auf das Hauptlager 15 wirken, im wesentlichen vom Pumpengehäuse 2 aufgenommen werden. Auf diese Weise werden keine nennenswerten mechanischen Spannungen in das Elektromotorgehäuse 1 induziert.

Wichtig ist aber, daß das Hauptlager 15 mit dem Motorgehäuse 1 verbunden ist. Wenn also Motorgehäuse 1 und Pumpengehäuse 2 voneinander getrennt sind, befindet sich das Hauptlager 15 am Motorgehäuse 1.

Da die Kräfte auf das Hauptlager 15, wie schon erläutert, im wesentlichen vom Pumpengehäuse 2 abgestützt werden, kann das Motorgehäuse 1 wie folgt ausgebildet werden. Es besteht aus einem Topf 24, der zum Pumpengehäuse 2 hin offen ist. Hier wird das Motorgehäuse 1 durch ein Lagerschild 25 abgeschlossen. Das Lagerschild kann, da es keine großen Kräfte aufnehmen muß, aus Kunststoff hergestellt sein. Es ist ebenfalls topfförmig und wird in den Topf 24 des Motorgehäuses 1 hineingesteckt, und zwar derart, daß die jeweils offenen Seiten einander zugewandt sind. Damit das Lagerschild 25 nicht vollständig in den Topf 24 des Motorgehäuses 1 hineinrutscht, sind Nasen 26 vorgesehen, die über den Innendurchmesser des Topfes 24 des Motorgehäuses 1 hinausragen und zwischen einem Bund 27 am Motorgehäuse 1 und dem Pumpengehäuse 2 eingeklemmt werden. Durch den nach außen ragenden Bund 27 werden die Schrauben 3 hindurchgesteckt, die das Motorgehäuse 1 mit dem Pumpengehäuse 2 verbinden.

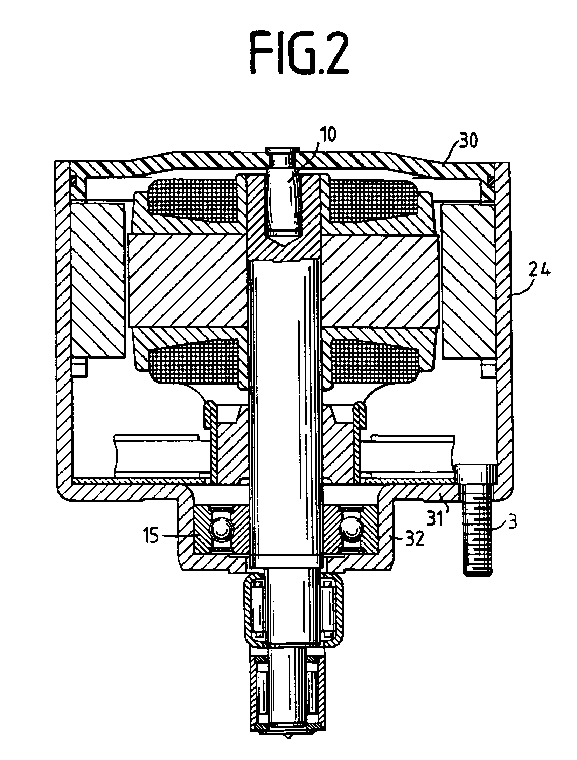

In der Fig. 2 ist eine etwas andere Ausführungsform des Motorgehäuses 1 dargestellt.

Das Motorgehäuse 1 besteht wiederum aus einem Topf 24, der sich aber nicht zum Pumpengehäuse 2, sondern von diesem weg öffnet. Die offene Seite des Topfes 24 ist durch einen Deckel 30 verschlossen, wobei das Hilfslager 10 ggf. an dem Deckel 30 befestigt ist. Der Boden 31 des Topfes 24 weist eine Ausbeulung 32 auf, die sich nach außen erstreckt und sich nach innen öffnet. Die Öffnung hat einen gerade so großen Durchmesser, daß das Hauptlager 15 aufgenommen werden kann. Da die Ausbeulung sich nach außen erstreckt, paßt sie gerade in die Ausnehmungen 23 im Pumpengehäuse 2 hinein. D.h., daß das Motorgehäuse 1 mit seiner Ausbeulung 32 in das Pumpengehäuse 2 eingesteckt wird. Dies hat zur Folge, daß die Kräfte auf das Hauptlager 15 wiederum im wesentlichen vom Pumpengehäuse 2 abgestützt werden. Diese Anordnung hat den Vorteil, daß die Schrauben 3, mit denen das Motorgehäuse 1 am Pumpengehäuse 2 befestigt wird, sich im Inneren des Motorgehäuses 1 befinden können. In den anderen Merkmalen entspricht die Ausführung nach Fig. 2 der Ausführung nach Fig. 1.

Das Pumpengehäuse 2 ist entsprechend Fig. 1 angeordnet und wurde daher daher nicht erneut dargestellt.

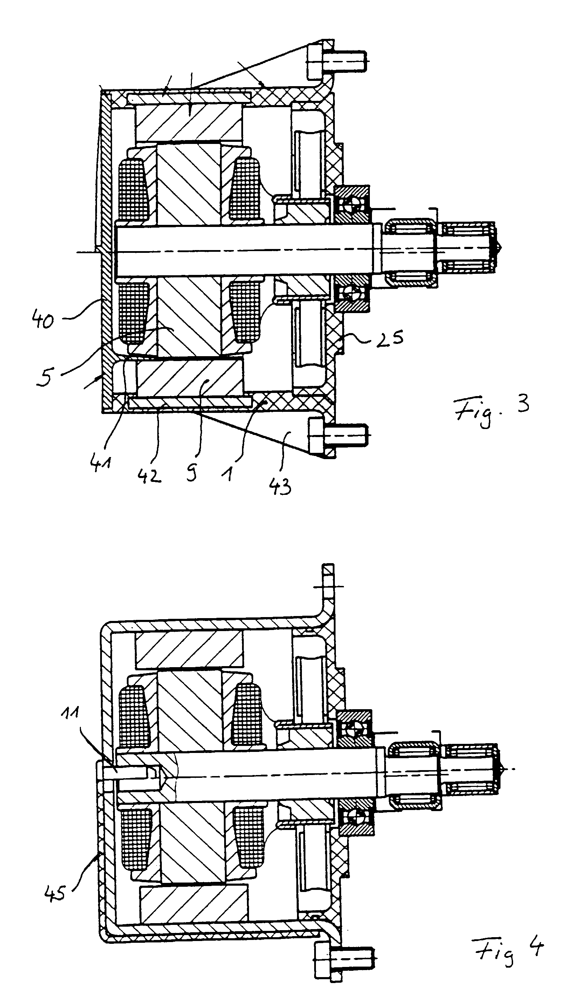

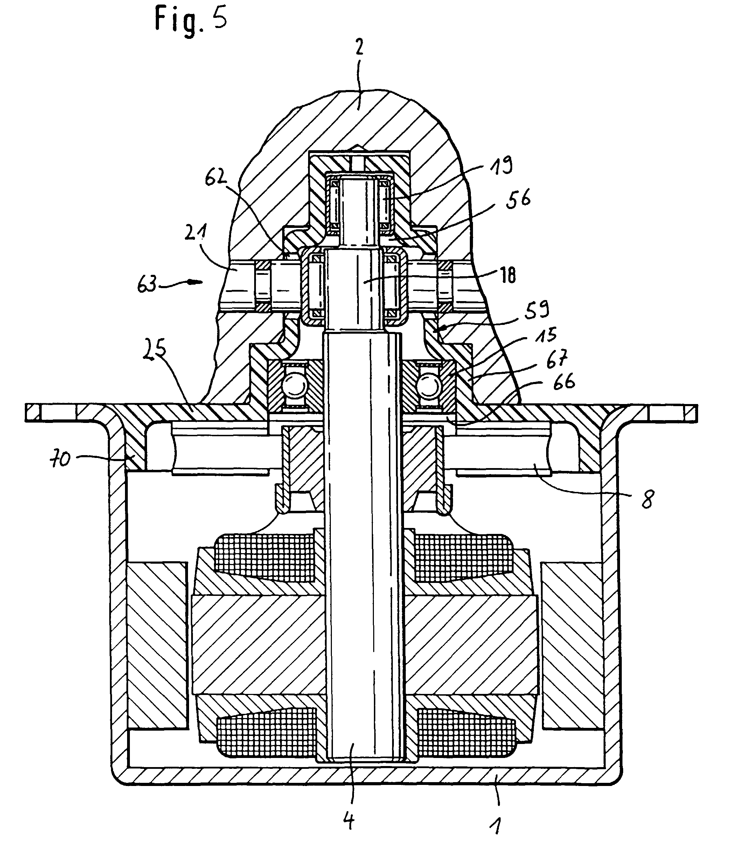

Die Figuren 3 und 4 entsprechen im wesentlichen der Ausführungsform nach Figur 1 mit den im folgenden erläuterten Unterschieden.

In der Figur 3 ist das Motorgehäuse 1 durch einen Zylinder gebildet, der auf der einen Seite durch das Lagerschild 25 und auf der anderen Seite durch einen Deckel 40 verschlossen wird. Der zylindrische Teil des Motorgehäuses ist ebenfalls aus Kunststoff und enthält einen Metallring 42, der dafür sorgt, daß der magnetische Schluß der Permanentmagnete 9 geschlossen wird. Damit das Motorgehäuse 1 eine ausreichende Steifigkeit aufweist, sind Stützwände 43 vorgesehen.

Der Deckel 40 weist eine Zunge 41 auf, die sich beim Aufsetzen des Deckels zwischen den Anker 5 und die Permanentmagnete 9 legt.

Die Zunge 41 dient als Transportsicherung. Der Deckel 40 mit der Zunge 41 wird nach der Montage des Motorgehäuses 1 auf das nicht dargestellte Pumpengehäuse 2 entfernt und durch einen Deckel ohne Nase 41 ersetzt.

In der Ausführung nach Figur 4 ist ein Bügel 45 vorgesehen, an dem der Zapfen 11 angeformt ist. Der Bügel mit Zapfen 11 dient einerseits als Transportsicherung, kann also nach der Montage vom Motorgehäuse und Pumpengehäuse entfernt werden. Er kann aber auch die Funktion des Hilfslagers 10 übernehmen, wie es weiter oben beschrieben ist.

Die Figur 5 zeigt in Weiterbildung des Erfindungsgedankens einen im Längsschnitt dargestellten Elektromotor, dessen den Ständer 1 bildendes Gehäuse an einem Pumpengehäuse 2 angeflanscht ist. Im Pumpengehäuse 2 sind eine doppelflutige Radialkolbenpumpe 63 zur Druckerzeugung für eine schlupfgeregelte Bremsanlage untergebracht. Zwischen dem Pumpengehäuse 2 und dem als Gehäusetopf ausgeformten Ständer 3 befindet sich ein käfigförmiges Stützgehäuse 59, das die beiden Lager 15, 19, die Welle 4, das Lagerschild 25, die die Schleifbürsten 8 und weitere elektrische Komponenten aufnimmt, umschließt. Das Stützgehäuse 59 ist korrosiongeschützt und leichtbauend zum Zwecke der elektrischen Isolierung der Trägerplatte und Abdichtung des Ständers 1 gegenüber dem Pumpengehäuse 2 aus einem Kunststoff-Spritzgußteil hergestellt. Das topfförmige Gehäuse des Ständers 1 ist in der gezeigten Ausführungsform als Dünnblech-Tiefziehteil ausgeführt und bildet eine dichte Schutzkappe sowie den Magnetkreis, wobei die Magnete im Ständer 1 eingelegt bzw. eingeklebt sind. Der Ständer 1 wird mittels Halteschrauben am Pumpengehäuse 2 angeflanscht. Eine formschlüssige Befestigung des Ständers 1 am Pumpengehäuse 2 ist gleichfalls denkbar. Der Stützkörper 59 ist an dem zum Ständer 1 gerichteten Bereich als scheibenförmige Trägerplatte ausgebildet und zwischen dem Pumpengehäuse 2 und dem Flansch des Ständers 1 eingespannt. Die Außenkontur des vorbeschriebenen Trägerplatten-Bereichs am Stützkörper 59 ist dem Übergangsradius am Flansch des topfförmigen Ständers 1 entsprechend angepaßt, so daß der scheibenförmige Bereich des Stützgehäuses 59 zu Zentrierzwecken einen als Bund 70 ausgeführten Übergangsbereich aufweist. Die Welle 4 des Läufers weist zwischen den beiden Lagern 15, 19 ein Exzenter 18 auf, der zur Verringerung der Reibleistung zwischen der Radialkolbenpumpe im Pumpengehäuse 2 und dem Elektromotor mit einem Nadellager versehen ist. Die diametral angeordneten Querbohrungen 62 des Stützgehäuses 59 im Bereich des Sacklochs 56 befinden sich somit auf Höhe des Exzenters 18, so daß nach der Montage des Elektromotors mit dem Stützgehäuse 59 im Pumpengehäuse 2, die Druckerzeugerelemente 21 der Kolbenpumpe radial auf die Welle 4 gerichtet von außen in die Pumpenzylinder im Pumpengehäuse 2 eingefügt werden, bis sie am Nadellager des Exzenters 18 (permanent) geführt, anliegen. Die Querbohrungen 62 haben den Vorteil, daß ein unbeabsichtigtes Entfernen (lose Halteschrauben) des Elektromotors vom Pumpengehäuse 2 ausgeschlossen ist, da die über das Lager 15 bestehende feste Verbindung des Stützgehäuses 59 mit der Motorwelle lediglich eine maximale Änderung der Axiallage um den Differenzbetrag zwischen den Durchmessern der Pumpkolben (Druckerzeugerelemente 21) und den Querbohrungen 62 zuläßt. Das am Wellenzapfen angeordnete Pumpenlager 19 ist gleichfalls als Nadellager gestaltet und in der Sackbohrung 56 des Stützgehäuses 59 eingepreßt oder vom Kunststoff umspritzt gehalten. Es übernimmt die Funktion eines Führungslagers (Loslager), während die Hauptlagerkräfte über das als Kugellager ausgebildete Lager 15 (Festlager) vom Motor über das Stützgehäuse 59 in das Pumpengehäuse 2 eingeleitet werden. Die Anordnung eines leicht, kleinbauenden und geschlossenen Stützgehäuses 59 begünstigt die Schallkapselung bzw. reduziert die Übertragung vom Körperschall zwischen Pumpe und Elektromotor und ermöglicht eine Funktionsprüfung (Probelauf) des Elektromotors vor der eigentlichen Montage im Pumpengehäuse 2.

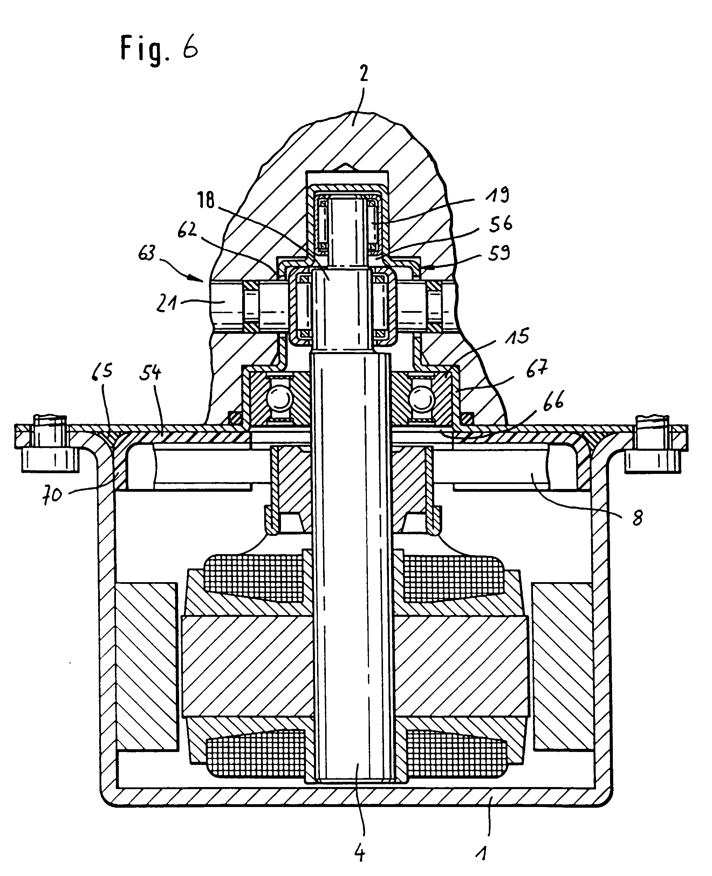

Die Figur 6 zeigt abweichend von Figur 5 das Stützgehäuse 59 als Metall-Tiefziehteil ausgeführt, das mit seinem scheibenförmigen Kontaktbereich zusammen mit dem Ständer 1 einen Befestigungsflansch bildet. Die im wesentlichen scheibenförmig ausgeführte Trägerplatte 54 ist als separates Kunststoffteil zwischen dem Flansch des Ständers 1 und dem Scheibenbereich des Stützgehäuses 59 gehalten. Das metallische Stützgehäuse 59 kann mit dem metallischen Ständer 1 verschweißt oder wie im Ausführungsbeispiel gezeigt, verschraubt sein, wobei eine zwischen dem Ständer 1, der Trägerplatte 54 und dem Stützgehäuse 59 eingelegte Dichtung 65 das Eindringen von Feuchtigkeit in den Elektromotor verhindert. Ein Bund 70 an der Trägerplatte 54 ist an die Form des Ständergehäuses angepaßt, so daß eine einfache Fixierung der Trägerplatte 54 gewährleistet ist, die im gezeigten Beispiel eine kraftschlüssige Fixierung der Trägerplatte 54 im Ständer 1 verursacht. Eine formschlüssige Fixierung ist gleichfalls durch einfache Herstellung im Spritzguß oder Tiefziehverfahren zu realisieren.

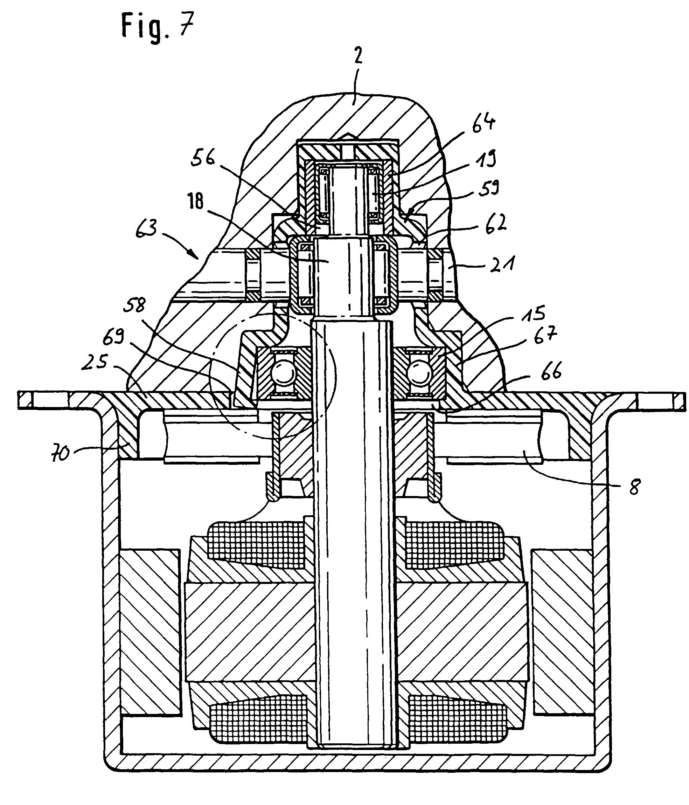

Die Figur 7 zeigt eine vorteilhafte weitere Ausführungsform des Stützgehäuses 59 als gespritzte Kunststoffschutzkappe bzw. Kunststoffkäfig, die zur Aufnahme des Pumpenlagers 19 eine mit in die Spritzform eingelegte und umspritzte metallische Hülse 64 aufweist. Hierdurch lassen sich in festigkeitskritischen Bereichen des Stützgehäuses 59 relativ kleine Wandstärken realisieren, ohne die Gefahr eines Defekts am Stützgehäuse 59 hinnehmen zu müssen. Zweckmäßig erweist sich die Fixierung des Hauptlagers 15 im Stützgehäuse 59 mittels Rasthaken 58, die relativ einfach durch entsprechende Aussparungen 69 und entsprechende Formgebung des Stützgehäuses 59 in einer Spritzgußform herzustellen sind. Die Aussparungen 69 und Rasthaken 58 nutzen die nicht unerheblichen elastischen Eigenschaften von dünnwandigen Kunststoffteilen aus und sind auch auf Dünnblechteile übertragbar. Ein direktes Umspritzen der Lagerung 15, 19 mit der Kunststoffmasse während der Herstellung des Stützgehäuses 59 stellt eine weitere zweckmäßige Befestigungsmaßnahme dar, so daß ein am Ständer 1 vormontiertes Stützgehäuse 59 als lauffähige Motoreinheit in die Stufenbohrung des Pumpengehäuses 2 eingesteckt und befestigt werden kann, wobei die Außenkontur des Stützgehäuses 59 der Kontur der Stufenbohrung des Pumpengehäuses 2 relativ einfach sowohl in den Kunststoffspritzformen wie auch in den Tiefziehformen angepaßt werden kann.

Zusammenfassend zeichnet sich die Erfindung durch die Merkmale aus, daß beide Lager 15, 19 sowie das Nadellager des Exzenters 18 von einem baulich und wirkungsmäßig geschlossenen Stützgehäuse 59 aufgenommen sind, das die Lagerkräfte aufnimmt und mit dem Motor eine geschlossene, funktionsfähige Einheit bildet. Dieses Stützgehäuse kann als Kunststoff-Spritzgußteil ausgeführt sein und die bisherige separate Anordnung der Trägerplatte 54 ersetzen. Alternativ kann das Stützgehäuse 59 als Tiefziehteil aus Metall hergestellt werden, das automatengerecht mit dem Ständergehäuse beispielsweise durch Schweißen dicht verbunden wird oder bei Anwendung eines lösbaren Verbindungsverfahrens mit einer eingelegten Dichtung sicher das Eindringen von Feuchtigkeit in den Motor verhindert. Im genannten Ausführungsbeispiel liegt eine isolierende Trägerplatte 54 zur Aufnahme der Schleifbürsten 8 zwischen dem Ständer 1 und dem Stützgehäuse 59 an. Besonders kritische und hochbeanspruchte Bereiche des Stützgehäuses 59 können durch das Umspritzen des Kunststoffes um eingelegte Metallhülsen hinsichtlich ihrer zulässigen Beanspruchung verbessert werden. Eine einfache axiale Fixierung der Lager 15, 19 kann durch Einlegen in die Spritzform und direktes Umspritzen mit dem Kunststoff erfolgen. Auch eine Fixierung über Rasthaken 58, die sich beim Einbau des Motors in den Pumpengehäuse 2 aufgrund ihrer Formgebung vor das betreffende Lager schieben, ermöglicht eine einfache billige Befestigungs- und Justiermaßnahme der Lagerung. Da die Pumpkolben erst nach dem Elektromotor im Pumpengehäuse 2 montiert werden, bilden sie eine Fesselung des Stützgehäuses 59 im Bereich der Querbohrungen 62, so daß eine Haltesicherung für den Ständer 1 am Pumpengehäuse 2 vorliegt.

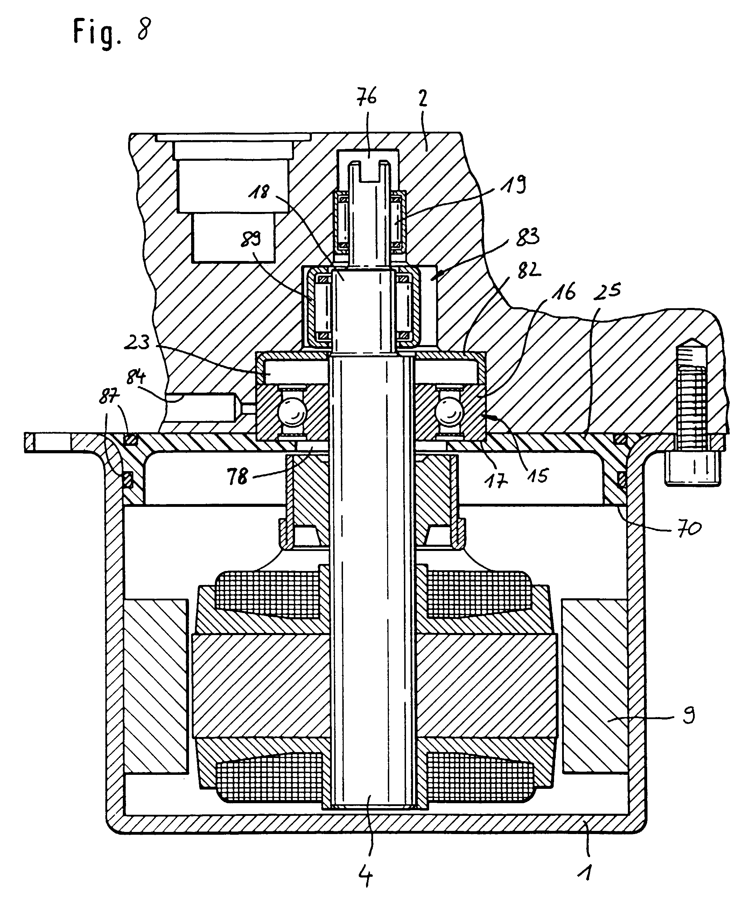

Die Figur 8 zeigt zur Verdeutlichung des Erfindungsgedankens im vergrößerten Maßstab einen im Querschnitt dargestellten Elektromotor, dessen den Ständer 1 bildendes Gehäuse an einem Pumpengehäuse 2 angeflanscht ist. Im Pumpengehäuse 2 sind eine doppelflutige Radialkolbenpumpe und elektrohydraulische Ventile zum Betrieb einer schlupfgeregelten Bremsanlage untergebracht, die in der gewählten Schnittdarstellung nicht explizit zu erkennen sind. Zwischen dem Pumpengehäuse 2 und dem als Gehäusetopf ausgeformten Ständer 1 befindet sich eine Trägerplatte 25, bzw. ein Lagerschild 25, das zur Aufnahme von Schleifbürsten und elektrischen Anschlußkomponenten geeignet ist. Das Lagerschild 25 ist zum Zwecke der Abdichtung des Ständers 1 gegenüber dem Pumpengehäuse 2 mit Dichtungen 87 versehen, die das Lagerschild 25 gegenüber dem Pumpengehäuse 2 und dem Gehäuse des Ständers 1 abdichten. Die Dichtungen 17 sind entweder in das Lagerschild 25 eingespritzt oder eingelegt. Das topfförmige Gehäuse des Ständers 1 ist in der gezeigten Ausführungsform als Dünnblech-Tiefziehteil ausgeführt und bildet eine dichte Schutzkappe sowie den Magnetkreis, wobei die Magnete 9 im Ständer 1 entweder eingelegt oder eingeklebt sind. Der Ständer 1 wird mittels Halteschrauben, die gleichfalls durch das Lagerschild 25 reichen am Pumpengehäuse 2 angeflanscht. Eine formschlüssige Befestigung des Ständers 1 am Pumpengehäuse 2 ist gleichfalls denkbar. Zur Erleichterung der Montage werden die Magnete 9 erst nach dem Anflanschen des Elektromtors am Pumpengehäuse 2 magnetisiert. Der Läufer wird zum Zwecke der Betriebsbereitstellung zunächst mit dem Lagerschild 25, dem Hauptlager (Lager 15), der Distanzscheibe 82 und dem Nadellager 89 versehen. Das Hauptlager 15 und Nadellager 89 weisen auf der Welle 4 bzw. Exzenter 18 einen Preßsitz auf. Das Pumpenlager (Lager 19) weist einen Preßsitz in dem Sackloch 76 (dritte Stufe) auf, so daß das Lager 19 die Funktion des Loslagers übernimmt und das Lager 15 das Festlager bildet. Die vormontierte Läufereinheit kann somit unter der Wirkung geringer Fügekräfte in die Bohrungsstufe 23 eingesteckt werden, wobei die Distanzscheibe 82 weitgehend vollflächig an der Bohrungsstufe 23 sowie am äußeren Lagerring 16 anliegt. Der äußere Lagerring 16 stützt sich gleichzeitig an einer ringförmigen Ausnehmung 17 in dem Lagerschild 25 ab. Die Ausnehmung 17 und der Bund 70 bilden eine Montage- und Fixiereinrichtung für das Hauptlager 15 und für den Gehäusetopf des Ständers 1, der mit den Magneten 19 über den Läufer gestülpt und angeschraubt wird. Der überwiegende Teil der Lagerkräfte wird durch das Hauptlager (Lager 15) aufgenommen. Nachdem die aus dem Lager 15, dem Nadellager 89, der Distanzscheibe 82 und der Trägerplatte 25 bestehende Baugruppe des Läufers als vormontierte Einheit in die Stufenbohrung 83 im Pumpengehäuse 2 eingeschoben und mit den Halteschrauben befestigt ist, wird als Verdrehsicherung des äußeren Lagerrings 16 des Lagers 15 in die Stufenbohrung 23 Klebstoffmasse gespritzt. Dies geschieht über eine den Pumpengehäuse 2 bis zur Stufenbohrung 23 durchdringende Bohrung 84, so daß der Lagerring 16 infolge der aufgetragenen Klebstoffmasse sicher befestigt ist. Durch diese Befestigungsmaßnahme kann der Durchmesser der Stufenbohrung 83 großzügig toleriert werden, wobei geringe Einpreßkräfte für das Lager 15 möglich sind. Die gewünschte Position des Lagers 15 sowie die Befestigung der weiteren mit der Welle 4 verbundenen Bauteile ist durch das als Montage- und Fixiereinrichtung wirksame Lagerschild 25 und die Distanzscheibe 82 gewährleistet.

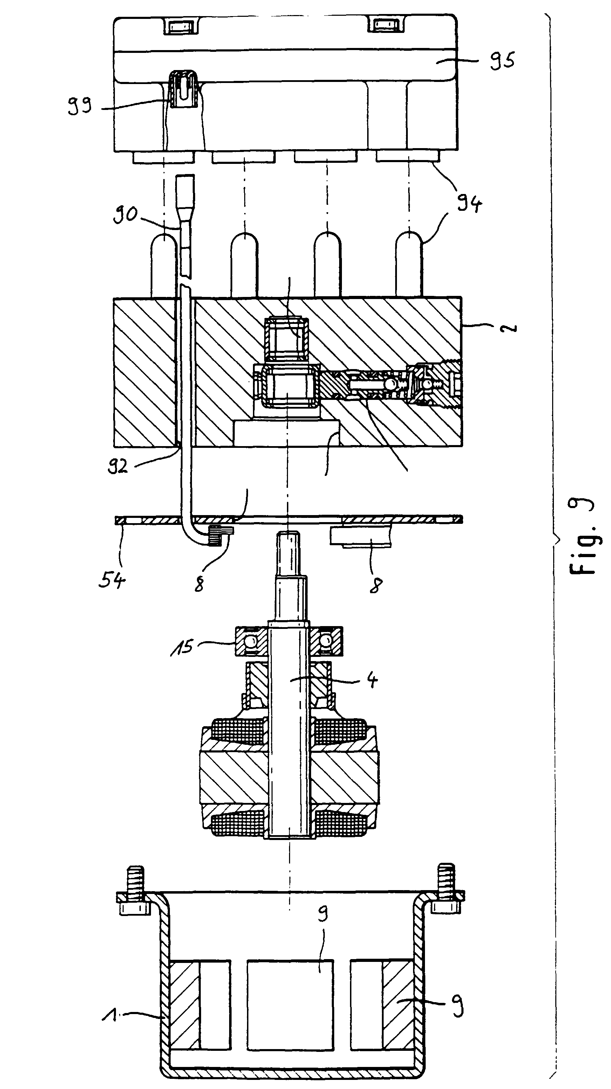

Die Fig. 9 zeigt eine Weiterbildung des Erfindungsgedankens eine Explosionszeichnung eines im Längsschnitt dargestellten Elektromotors, dessen den Ständer 3 bildendes Gehäuse 1 an einem Pumpengehäuse 2 angeflanscht ist. Im Pumpengehäuse 2 sind eine doppelflutige Radialkolbenpumpe 63 und elektrohydraulische Ventile 94 zum Betrieb einer schlupfgeregelten Bremsanlage untergebracht. Zwischen dem Pumpengehäuse 2 und dem als Gehäusetopf ausgeformten Ständer 1 befindet sich eine Trägerplatte 54, die die Schleifbürsten 8 und die elektrische Anschlußkomponente 90 aufnimmt. Die als Kabelstrang dargestellte Anschlußkomponente 90 ist innerhalb einer Durchgangsbohrung 92 im Pumpengehäuse 2 abgedichtet geführt und mittels einer Steckverbindung an eine Steuer- und Regelelektronik 95 angeschlossen, die gleichfalls die Spulen der elektrohydraulischen Ventile 94 aufnimmt. Die elektrische Verbindung zwischen dem Elektromotor und der Steuer- und Regelelektronik 95 erfolgt somit innerhalb des Gesamtaggregates. Die Trägerplatte 54 ist zum Zwecke der Abdichtung des Ständers 1 gegenüber dem Aufnahmekörper 2 aus einem Dichtungsmaterial hergestellt. Das topfförmige Gehäuse des Ständers 1 ist in der gezeigten Ausführungsform als Dünnblech-Tiefziehteil ausgeführt und bildet eine dichte Schutzkappe sowie den Magnetkreis, wobei die Magnete im Ständer eingelegt bzw. eingeklebt sind. Der Ständer 1 wird mittels Halteschrauben, die gleichfalls durch die Trägerplatte 4 reichen, am Pumpengehäuse 2 angeflanscht. Eine formschlüssige Befestigung des Ständers 1 am Pumpengehäuse 2 ist gleichfalls denkbar.

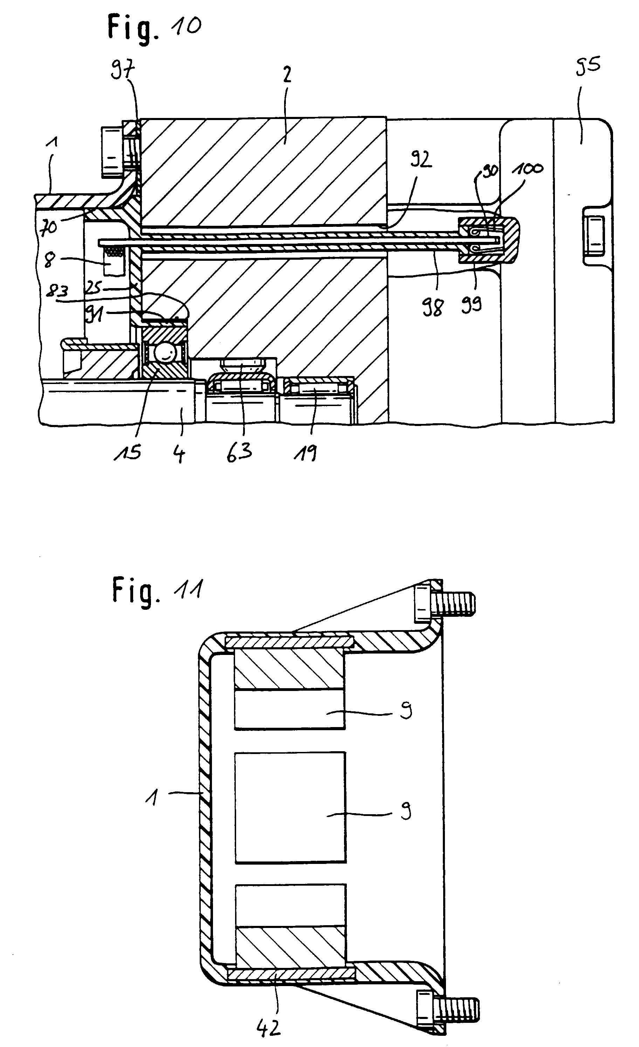

Die Figur 10 zeigt abweichend von Figur 9 die Trägerplatte 54 als Kunststoff-Formteil, das an seinem äußeren Bund entweder mit einer angespritzten Dichtung oder Einlegedichtung 97 zwischen dem Ständer 1 und dem Pumpengehäuse 2 die Abdichtung des Motorgehäuses sicherstellt. Der Bund 70 an der Trägerplatte 54 ist an die Form des Gehäuseflanschs angepaßt, so daß eine einfache Ausrichtung der Trägerplatte 4 gewährleistet ist.

Als weiteres Unterscheidungsmerkmal zu den bereits beschriebenen Ausführungsformen der Erfindung ist in Figur 10 die elektrische Anschlußkomponente 90 mit dem Material der Trägerplatte 54 derart umspritzt, daß die Durchgangsbohrung 92 von einem Fortsatz 98 der Trägerplatte 54 überragt wird. Der Fortsatz 98 kontaktiert einen Stecker 99 einer auf den elektrohydraulischen Ventilen 94 aufgesetzten Steuer- und Regelelektronik 95. Die elektrische Anschlußkomponente 90 ist in der gezeigten Ausführung als Kontaktfahne ausgebildet, die über Kontaktfedern 100 mit der Steuer- und Regelelektronik 95 verbunden ist. Der Fortsatz 98 bildet hierbei eine dichte und verrastbare Einheit mit dem Stecker 99.

Zum Zwecke der Geräuschdämpfung und zum Toleranzausgleich ist die Trägerplatte 54 mit einem dem Pumpengehäuse 2 zugewandten Bund 91 versehen, der das auf der Welle 1 befestigte Hauptlager 15 am Außendurchmesser umschließt und mit dem Hauptlager 15 in die Stufenbohrung 83 im Pumpengehäuse 2 mit eingesetzt ist.

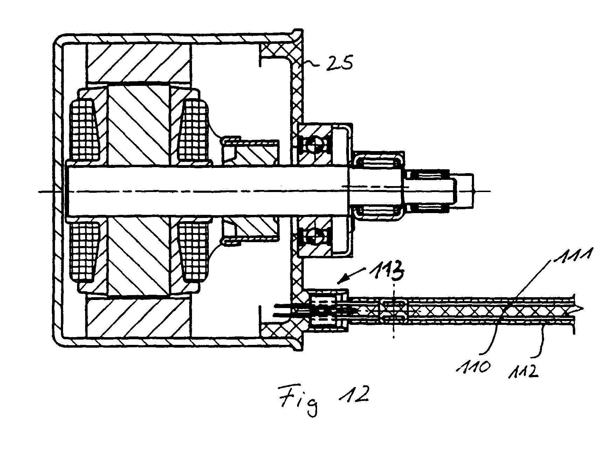

Die Figur 11 zeigt eine vorteilhafte und einfache Ausführungsform des Ständers 1 als gespritzte Kunststoffschutzkappe im Längsschnitt, in die ein Metallring 42 zur Bildung des Magnetkreises zusammen mit den Magneten 9 im Ständer 1 gehalten ist.

Zusammenfassend ergeben sich durch den in der Figur 9 bis 11 beschriebenen Erfindungsgegenstand die Vorteile, daß die elektrische Anschlußkomponente 90 eine integrale Einheit des Gesamtaggregates bildet, die nicht mehr peripher abgedichtet und befestigt werden muß, daß eine möglichst direkte und damit kurze Verkabelung bzw. Verdrahtung des Elektromotors mit der Energieversorgung (Steuer- und Regelelektronik 95) gewährleistet ist, daß die Voraussetzung für eine automatengerechte Verlötung bzw. Verschweißung der elektrischen Anschlußkomponente 90, unter anderem mit der Schleifbürsten-Befestigung geschaffen ist, wobei die der Energieversorgung zugewandte Seite der elektrischen Anschlußkomponente 90 mit einem einfachen Stecksystem versehen ist. Die elektrische Anschlußkomponente 90 kann damit in seinen Ausführungsformen durch einen mit dem Trägermaterial umspritzten Draht oder durch ein umspritztes Stanzgitter hergestellt werden, das durch die gewünschte Steifigkeit, Dichtheit und elektrischen Isolation eine funktionsgerechte Verbindung zwischen dem Elektromotor und der Energieversorgung gewährleistet.

Es ergeben sich weitere Vorteile durch die kurzbauende Lagerung des Läufers in einem Sackloch 83 des Pumpengehäuses 2, der auch die elektrohydraulischen Ventile 94 und die Steuer- und Regelelektronik 95 einer bremsschlupfgeregelten Anlage aufweist. Als besonders zweckmäßig läßt sich hierbei die Anordnung der Trägerplatte 54 zwischen dem Pumpengehäuse 2 und dem Gehäuse des Ständers 1 verwirklichen, indem die Trägerplatte 54 entweder mit einer angespritzten Dichtung beide Fügeteile abdichtet oder diese aus einer Preßplatte (Hartpapierplatte) hergestellt wird, die außer der Haltefunktion für das Bürstensystem und der elektrischen Anschlußkomponente 90 gleichzeitig eine Dichtfunktion wahrnimmt. Vorteilhaft kann durch die entsprechende Ausformung eines Vorsprungs 91 an der Trägerplatte 54 das Lager 15 der Welle 4 geführt werden und so ein Toleranzausgleich und eine Geräuschdämpfung der Welle 4 begünstigt werden.

In Figur 12 ist eine weitere Ausführungsform der Kabeldurchführung dargestellt.

Die Kabel 110 der Stromzuführung sind in ein Stanzgitter 111 eingelegt, das mit Kunststoff 112 umspritzt ist. Der Kunststoff wird an das Gehäuse der elektronischen Regeleinheit 95 angespritzt, so daß das Gehäuse der elektronischen Regeleinheit 95 und die Kabeldurchführung einen integralen Bestandteil bilden. An dem Ende der Kabeldurchführung, das dem Motor zugewandt ist, ist ein Stecker 13 vorgesehen. Gleichzeitig weist das Lagerschild 25 einen Gegenstecker auf, der integraler Bestandteil des Lagerschildes 25 ist. Mit dem Zusammenbau erfolgt automatisch die elektrische Verbindung des Elektromotors mit der elektronischen Regeleinheit 95.

Die Kabeldurchführung kann auch in Abwandlung der Ausführung nach Figur 12 als Einzelteil vorgesehen werden, das an beiden Enden Stecker aufweist. Der eine Stecker kontaktiert den Stecker am Elektromotor, der andere Stecker kontaktiert einen Stecker der elektronischen Regeleinheit 95. Diese Einzelausführung erlaubt eine bessere Kombinationsmöglichkeit, so daß verschiedene Typen des Motor-Pumpen-Aggregats hergestellt werden können.

Die Kabeldurchführung selbst, kann ebenfalls aus zwei Teilen hergestellt werden, wobei jedes Teil eine Ader aufweist. Die beiden Teile sind dann symmetrisch zueinander ausgebildet und können zu einer Kabeldurchführung zusammengesteckt werden. Dazu weisen die einzelnen Elemente zueinander passende Nasen bzw. Vertiefungen auf.

### Bezugszeichenliste

- 1: Motorgehäuse, Ständer
- 2: Pumpengehäuse
- 3: Schraube
- 4: Ankerwelle
- 5: Anker
- 6: Wicklungen
- 7: Kollektor
- 8: Bürsten
- 9: Permanentmagnete
- 10: Hilfslager
- 11: Zapfen
- 12: Niet
- 13: Boden
- 14: Sackbohrung
- 15: Hauptlager
- 16: Lagerring
- 17: Ausnehmung
- 18: Pumpenexzenter
- 19: Pumpenlager
- 20: Bohrungen
- 21: Pumpenkolben
- 22: Nadellager
- 23: 1. Stufe
- 24: Topf
- 25: Lagerschild
- 26: Nasen
- 27: Bund
- 30: Deckel
- 31: Boden
- 32: Ausbeulung
- 40: Deckel
- 41: Zunge
- 42: Metallring
- 45: Bügel
- 54: Trägerplatte
- 56: Sackloch
- 58: Rasthaken
- 59: Stützgehäuse
- 62: Querbohrung
- 63: Radialkolbenpumpe
- 64: Hülse
- 65: Dichtung
- 66: Öffnung
- 67: Vorsprung
- 69: Aussparung
- 70: Bund
- 76: Sackloch
- 78: Öffung
- 82: Distanzscheibe
- 83: Stufenbohrung
- 84: Bohrung
- 87: Dichtung
- 89: Nadellager
- 90: Anschlußkomponente
- 91: Bund
- 92: Durchgangsbohrung
- 94: elektrohydraulische Ventile
- 95: Steuer- und Regelelektronik
- 97: Einlegedichtung
- 98: Fortsatz
- 99: Stecker
- 100: Kontaktfeder

## Patentansprüche

1. Elektromotor-Pumpen-Aggregat, bestehend aus einem Elektromotor, dessen Gehäuse (1) mindestens ein Lagerschild (25) aufweist, das ein erstes Lager, nämlich das Hauptlager (15) für einen Anker (4) mit Exzenter (18) zum Antrieb von Pumpenkolben (21) hält, und aus einer Pumpe, deren Gehäuse (2) eine Anlagefläche aufweist, in der senkrecht eine mehrstufige Bohrung (83) einmündet, wobei die erste Stufe (23), die an die Anlagefläche angrenzt, das Hauptlager aufnimmt und radial abstützt, in die zweite Stufe, die an die erste Stufe (23) anschließt, Bohrungen (20), einmünden, die die Pumpenkolben (21) aufnehmen, sowie mit einer dritten Stufe, wobei das Elektromotorgehäuse (1) und das Pumpengehäuse (2) derart miteinander verbunden sind, daß das Lagerschild (25) an der Anlagefläche des Pumpengehäuses (2) anliegt, dadurch gekennzeichnet, daß die dritte Stufe, die an die zweite Stufe angrenzt, ein zweites Lager, nämlich das Pumpenlager (19) aufnimmt und radial abstützt, so daß der Anker (4) vom ersten und zweiten Lager getragen wird.

2. Aggregat nach Anspruch 1, dadurch **gekennzeichnet,** daß die Ankerwelle (4) ausschließlich vom ersten und zweiten Lager getragen wird.

3. Aggregat nach Anspruch 1, dadurch **gekennzeichnet,** daß ein Hilfslager (10) vorhanden ist, das im Elektromotorgehäuse (1) angeordnet ist, und das ankerseitige Ende der Ankerwelle (4) trägt.

4. Aggregat nach Anspruch 3, dadurch **gekennzeichnet,** daß das Hilfslager (10) aus einem tonnenförmigen Zapfen (11) besteht, der in einer Bohrung (14) in der Ankerwelle (4) angeordnet ist.

5. Aggregat nach Anspruch 4, dadurch **gekennzeichnet,** daß der tonnenförmige Zapfen (11) mittels einer Niet (12) am Motorgehäuse (1) befestigt ist und daß die Bohrung als Sackbohrung (14) ausgebildet ist, die axial in der Ankerwelle (4) ausgebildet ist und sich zu einer Stirnseite der Ankerwelle (4) hin öffnet.

6. Aggregat nach einem der vorhergehenden Ansprüche, dadurch **gekennzeichnet,** daß das Pumpen- und Hauptlager (15,19) als Wälz- oder Gleitlager ausgebildet sind.

7. Aggregat nach Anspruch 1, dadurch **gekennzeichnet,** daß das Motorlager (15) einen äußeren Lagerring (16) aufweist, der in einer Ausnehmung (17) am Motorgehäuse über eine Teillänge eingesteckt ist, so daß der Lagerring (16) aus dem Gehäuse bzw. dem Lagerschild (25) herausragt, und daß im Pumpengehäuse (2) eine erste Stufe (23) vorgesehen ist, in der der herausragende Teil des Lagerrings (16) einsteckbar ist.

8. Aggregat nach Anspruch 1, dadurch **gekennzeichnet,** daß das Motorgehäuse (1) eine Ausbeulung (32) aufweist, die nach außen herausragt und sich in das Innere des Motorgehäuses (1) öffnet, wobei in die entsprechende Vertiefung das erste Lager (15) eingesetzt ist und die Ausbeulung (32) in die erste Stufe (23) im Pumpengehäuse (2) einsteckbar ist.

9. Aggregat nach einem der vorhergehenden Ansprüche, dadurch **gekennzeichnet,** daß ein Stützgehäuse (59) vorgesehen ist, das das auf der Welle (4) verschiebbare Pumpenlager (19) in einem Sackloch (56) des Stützgehäuses (59) fixiert, daß das Stützgehäuse (59) das auf der Welle (4) gegenüber dem Pumpengehäuse (1) beabstandete Hauptlager (7) aufnimmt, wobei der Kraftfluß zwischen der Wellenlagerung im Stützgehäuse (59) und dem Motorgehäuse (1) geschlossen ist.

10. Aggregat nach Anspruch 9, dadurch **gekennzeichnet,** daß das Stützgehäuse (59) eine Öffnung (66) aufweist, deren Innendurchmesser gleich oder wenig kleiner ist als der Außendurchmesser des Hauptlagers (15).

11. Aggregat nach Anspruch 9 oder 10, dadurch **gekennzeichnet,** daß das Stützgehäuse (59) eine Trägerplatte (25) mit elektrischen Komponenten aufweist.

12. Aggregat nach mindestens einem der vorhergehenden Ansprüche, dadurch **gekennzeichnet,** daß auf der Trägerplatte (25) Schleifbürsten (8) befestigt sind.

13. Aggregat nach einem der vorhergehenden Ansprüche, dadurch **gekennzeichnet,** daß das Stützgehäuse (59) an den Kontaktstellen zwischen dem Motorgehäuse (1) und dem Pumpengehäuse (2) eine Abdichtung aufweist.

14. Aggregat nach mindestens einem der vorhergehenden Ansprüche, dadurch **gekennzeichnet,** daß das Stützgehäuse (59) mit einem Vorsprung (67) versehen ist, der das Hauptlager (15) am Außenumfang umgreift.

15. Aggregat nach Anspruch 11, dadurch **gekennzeichnet,** daß das Stützgehäuse (59) aus einem dünnwandigen, als Käfig ausgebildeten Kunststoffspritzgußteil besteht, das mit dem Lagerschild (25) eine homogene Einheit bildet.

16. Aggregat nach Anspruch 15, dadurch **gekennzeichnet,** daß im Haltebereich der Lager (15, 19) metallische Hülsen (64) im Stützgehäuse (59) eingebettet sind.

17. Aggregat nach Anspruch 9, dadurch **gekennzeichnet,** daß das Stützgehäuse (59) aus einem durch Tiefzieh- oder Preßverfahren hergestelltes Dünnblechteil besteht, das mit der isolierten Trägerplatte (54) zwischen dem Motorgehäuse (1) und dem Pumpengehäuse (2) gedichtet eingespannt ist.

18. Aggregat nach Anspruch 9 bis 14, dadurch **gekennzeichnet,** daß der Haltebereich zur Aufnahme des Hauptlagers (15) mit Rasthaken (58) versehen ist, wozu Aussparungen (69) im Stützgehäuse (59) vorgesehen sind.

19. Aggregat nach einem der vorhergehenden Ansprüche, dadurch **gekennzeichnet,** daß das Lagerschild (25) eine Öffnung (78) aufweist, deren Innendurchmesser kleiner ist als der Außendurchmesser des Hauptlagers (15), und daß das Lagerschild (25) zwischen dem Hauptlager (15) und dem Elektromotorengehäuse (1) angeordnet ist.

20. Aggregat nach Anspruch 19, dadurch **gekennzeichnet,** daß das Lagerschild (25) im Bereich der Öffnung (78) mit einer Ausnehmung (17) versehen ist, an der sich die Stirnfläche des äußeren Lagerrings (16) des Hauptlagers (15) abstützt.

21. Aggregat nach Anspruch 19 oder 20, dadurch **gekennzeichnet,** daß auf der zum Lagerschild (25) abgewandten Stirnfläche des äußeren Lagerrings (16) eine Distanzscheibe (82) anliegt, die auf der vom Hauptlager (15) abgewandten Stirnfläche einer Stufenbohrung (zweite Stufe 83) im Pumpengehäuse (2) kontaktiert.

22. Aggregat nach Anspruch 21, dadurch **gekennzeichnet,** daß die Distanzscheibe (82) mit einem am Außenumfang angeformten Bund den äußeren Lagerring (16) am Hauptlager (15) kontaktiert, und daß der Innendurchmesser der Distanzscheibe (82) näherungsweise dem Wellendurchmesser entspricht.

23. Aggregat nach einem der vorhergehenden Ansprüche, dadurch **gekennzeichnet,** daß eine Bohrung (84) in Umfangsrichtung auf die Stufenbohrung in dem Pumpengehäuse (2) einmündet, wobei die Bohrung (84) mit dem äußeren Lagerring (16) in Überdeckung gelangt.

24. Aggregat nach Anspruch 1, dadurch **gekennzeichnet,** daß das der Antriebs- oder Abtriebsseite entgegengesetzte Ende der Welle (4) frei von Lagerkräften ist, daß die Lagerung der Antriebs- oder Abtriebsseite der Welle (4) im Pumpengehäuse (2) angeordnet ist, und daß zwischen dem Elektromotorgehäuse (1) und dem Pumpengehäuse (2) eine Trägerplatte (54) eingespannt ist.

25. Aggregat nach Anspruch 2. , dadurch **gekennzeichnet,** daß die Trägerplatte (54) an den Kontaktstellen zwischen dem Elektromotorgehäuse (1) und dem Pumpengehäuse (2) eine Abdichtung bildet.

26. Aggregat nach Anspruch 24, dadurch **gekennzeichnet,** daß das Pumpengehäuse (2) mit einer Durchgangsbohrung (92) versehen ist, die elektrische Anschlußkomponenten (89) aufnimmt.

27. Aggregat nach Anspruch 26, dadurch **gekennzeichnet,** daß die elektrische Maschine aus einem Elektromotor zum Antrieb einer im Pumpengehäuse (2) angeordneten Radialkolbenpumpe (63) gebildet ist, und daß die elektrische Anschlußkomponente (89) des Elektromotors an einer als Energieversorgung wirksamen Steuer- und Regelelektronik (95) angeschlossen ist.

## Claims

1. Electric motor-pump-assembly consisting of an electric motor having a housing (1) which is provided with at least one bearing plate (25) retaining a first bearing, i.e., main bearing (15), for a rotor shaft (4) including eccentric (18) for driving pump pistons (21), and a pump having a housing (2) which includes an abutment surface into which a bore (83) with several steps terminates in a vertical direction, wherein the first step (23) adjacent to the abutment surface accommodates the main bearing and supports it radially, wherein bores (20) which accommodate the pump pistons (21) open into the second step following the first step (23) and a third step is provided, wherein the housing of the electric motor (1) and the pump housing (2) are coupled to each other in such a way that the bearing plate (25) abuts on the abutment surface of the pump housing (2),
**characterized** in that the third step which is adjacent to the second step accommodates a second bearing, i.e., pump bearing (19), and supports it radially, so that the rotor shaft (4) is supported by the first and second bearings.

2. Assembly as claimed in claim 1,
**characterized** in that the rotor shaft (4) is supported only by the first and second bearings.

3. Assembly as claimed in claim 1,
**characterized** in that there is one accessory bearing (10) arranged in the housing (1) of the electric motor which supports the end of the rotor shaft (4) close to the rotor.

4. Assembly as claimed in claim 3,
**characterized** in that the accessory bearing (10) comprises a barrel-shaped journal (11) which is arranged in a bore (14) of the rotor shaft (4).

5. Assembly as claimed in claim 4,
**characterized** in that the barrel-shaped journal (11) is fastened to the motor housing (1) by means of a rivet (12), and in that the bore is a blind-end bore (14) extending in an axial direction in the rotor shaft (4) and opening towards one frontal end of the rotor shaft (4).

6. Assembly as claimed in any one of the preceding claims,
**characterized** in that the pump and main bearings (15, 19) are configured as roller or friction bearings.

7. Assembly as claimed in claim 1,
**characterized** in that the motor bearing (15) is provided with an outer bearing ring (16), the length of which is inserted in part in a recess (17) on the motor housing so that the bearing ring (16) projects from the housing or the bearing plate (25), and in that in the pump housing (2) a first step (23) is provided in which can be inserted the projecting part of the bearing ring (16).

8. Assembly as claimed in claim 1,
**characterized** in that the motor housing (1) includes a bulge (32) projecting to the outside and opening into the interior of the motor housing (1), the first bearing (15) being inserted in the corresponding recess and the bulge (32) being insertable into the first step (23) of the pump housing (2).

9. Assembly as claimed in any one of the preceding claims,
**characterized** in that a supporting housing (59) fixes the pump bearing (19) which moves on the shaft (4) in a blind-end bore (56) of the supporting housing (59), that the supporting housing (59) accommodates the main bearing (7) on the shaft spaced from the pump housing (1), the flux of forces between the shaft bearing in the supporting housing (59) and the motor housing (1) being closed.

10. Assembly as claimed in claim 9,
**characterized** in that the supporting housing (59) is provided with an opening (66) having an inner diameter which is equal to, or slightly smaller than, the outer diameter of the main bearing (15).

11. Assembly as claimed in claim 9 or 10,
**characterized** in that the supporting housing (59) is equipped with a carrier plate (25) with electric components.

12. Assembly as claimed in at least one of the preceding claims,
**characterized** in that brushes (8) are fastened on the carrier plate (25).

13. Assembly as claimed in any one of the preceding claims,
**characterized** in that the supporting housing (59) is provided with a sealing at the contact points between the motor housing (1) and the pump housing (2).

14. Assembly as claimed in at least one of the preceding claims,
**characterized** in that the supporting housing (59) includes a projection (67) enclosing the main bearing (15) at the outer diameter.

15. Assembly as claimed in claim 11,
**characterized** in that the supporting housing (59) comprises an injection-moulded plastic part with thin walls and shaped like a cage, which builds a homogenous assembly along with the bearing plate (25).

16. Assembly as claimed in claim 15,
**characterized** in that metal sleeves (64) are inserted into the supporting housing (59) in the retaining area of the bearings (15,19).

17. Assembly as claimed in claim 9,
**characterized** in that the supporting housing (59) consists of a part made of thin sheet metal in a deep drawing or pressing procedure and is clamped in a sealed manner between the motor housing (1) and the pump housing (2) with the insulated carrier plate (54).

18. Assembly as claimed in claims 9 to 14,
**characterized** in that the retaining area is equipped with snap-in hooks (58) in order to accommodate the main bearing (15) and recesses (69) are provided in the supporting housing (59) to this end.

19. Assembly as claimed in any one of the preceding claims,
**characterized** in that the bearing plate (25) contains an opening (78) having an inner diameter which is smaller than the outer diameter of the main bearing (15), and in that the bearing plate (25) is arranged between the main bearing (15) and the housing of the electric motor (1).

20. Assembly as claimed in claim 19,
**characterized** in that the bearing plate (25) in the area of the opening (78) is provided with a recess (17) on which the frontal surface of the outer bearing ring (16) of the main bearing (15) abuts.

21. Assembly as claimed in claim 19 or 20,
**characterized** in that a spacer disc (82) abuts on the frontal surface of the outer bearing ring (16) remote from the bearing plate (25), which contacts the frontal surface of a stepped bore (second step 83) in the pump housing (2) remote from the main bearing (15).

22. Assembly as claimed in claim 21,
**characterized** in that the spacer disc (82) with a collar provided on the outer periphery contacts the outer bearing ring (16) on the main bearing (15), and in that the inner diameter of the spacer disc (82) corresponds approximately to the shaft diameter.

23. Assembly as claimed in any one of the preceding claims,
**characterized** in that a bore (84) leads in peripheral direction to the stepped bore in the pump housing (2), the bore (84) becoming overlapped by the outer bearing ring (16).

24. Assembly as claimed in claim 1,
**characterized** in that the end of the shaft (4) opposite to the input or output end is free from bearing forces, in that the bearing of the input or output end of the shaft (4) is arranged in the pump housing (2), and in that a carrier plate (54) is clamped between the electric motor housing (1) and the pump housing (2).

25. Assembly as claimed in claim 2,
**characterized** in that the carrier plate (54) provides for a sealing at the contact points between the electric motor housing (1) and the pump housing (2).

26. Assembly as claimed in claim 24,
**characterized** in that the pump housing (2) is provided with a through-bore (92) accommodating electric connection components (89).

27. Assembly as claimed in claim 26,
**characterized** in that the electric machine consists of an electric motor for driving a radial piston pump (63) arranged in the pump housing (2), and in that the electric connection component (89) of the electric motor is connected to a control electronics unit (95) acting as power supply.

## Revendications

1. Ensemble moteur électrique-pompe, constitué d'un moteur électrique, dont le carter (1) comporte au moins un flasque de palier (25) maintenant un premier palier, à savoir le palier principal (15) pour un induit (4) qui comporte un excentrique (18) servant à entraîner des pistons de pompe (21), et d'une pompe dont le carter (2) comporte une surface d'appui dans laquelle un alésage (83) à plusieurs étages débouche perpendiculairement, tandis que la première partie étagée (23), qui est adjacente à la surface d'appui, reçoit et soutient radialement le palier principal, que des alésages (20), qui reçoivent les pistons de pompe (21), débouchent dans la deuxième partie étagée qui est adjacente à la première partie étagée (23) et qu'il est prévu une troisième partie étagée, le carter de moteur électrique (1) et le carter de pompe (2) étant rendus solidaires l'un de l'un de l'autre de façon que le flasque de palier (25) soit appliqué sur la surface d'appui du carter de pompe (2), caractérisé en ce que la troisième partie étagée, qui est adjacente à la deuxième partie étagée, reçoit et soutient radialement un second palier, à savoir le palier de pompe (19), de sorte que l'induit (4) est porté par le premier et le second paliers.

2. Ensemble selon la revendication 1, caractérisé en ce que l'arbre d'induit (4) est porté exclusivement par le premier et le second paliers.

3. Ensemble selon la revendication 1, caractérisé en ce qu'il est prévu un palier auxiliaire (10) qui est disposé dans le carter de moteur électrique (1) et qui porte l'extrémité de l'arbre d'induit (4) située du côté de l'induit.

4. Ensemble selon la revendication 3, caractérisé en ce que le palier auxiliaire (10) est constitué d'un pivot (11) en forme de tonneau qui est disposé dans un alésage (14) ménagé dans l'arbre d'induit (4).

5. Ensemble selon la revendication 4, caractérisé en ce que le pivot (11) en forme de tonneau est fixé au carter de moteur (1) au moyen d'un rivet (12) et en ce que l'alésage est réalisé sous forme d'un alésage borgne (14) qui est ménagé axialement dans l'arbre d'induit (4) et s'ouvre sur une face frontale de l'arbre d'induit (4).

6. Ensemble selon l'une des revendications précédentes, caractérisé en ce que le palier de pompe et le palier principal (15, 19) sont réalisés sous forme de paliers de roulement ou de paliers lisses.

7. Ensemble selon la revendication 1, caractérisé en ce que le palier de moteur (15) comporte une bague extérieure de palier (16) qui est emboîtée sur une partie de sa longueur dans un évidement (17) ménagé sur le carter de moteur, de façon que la bague de palier (16) fasse saillie hors du carter, plus précisément du flasque de palier (25), et en ce que, dans le carter de pompe (2), il est prévu une première partie étagée (23) dans laquelle la partie en saillie de la bague de palier (16) est emboîtable.

8. Ensemble selon la revendication 1, caractérisé en ce que le carter de moteur (1) comporte une partie repoussée (32) qui fait saillie vers l'extérieur et s'ouvre à l'intérieur du carter de moteur (1), tandis que le premier palier (15) est monté dans la partie en retrait correspondante et que la partie repoussée (32) est emboîtable dans la première partie écagée (23) ménagée dans le carter de pompe (2).

9. Ensemble selon l'une des revendications précédentes, caractérisé en ce qu'il est prévu un boîtier de soutien (59) qui immobilise le palier de pompe (19), pouvant coulisser sur l'arbre (4), dans un évidement borgne (56) du boîtier de soutien (59), et en ce que le boîtier de soutien (59) reçoit le palier principal (15) disposé à distance du carter de pompe (1) sur l'arbre (4), tandis que le flux de force est fermé entre le montage à palier de l'arbre dans le boîtier de soutien (59) et le carter de moteur (1).

10. Ensemble selon la revendication 9, caractérisé en ce que le boîtier de soutien (59) comporte une ouverture (66) dont le diamètre intérieur est égal, ou inférieur de peu, au diamètre extérieur du palier principal (15).

11. Ensemble selon la revendication 9 ou 10, caractérisé en ce que le boîtier de soutien (59) comprend une plaque de support (25) comportant des composants électriques.

12. Ensemble selon au moins l'une des revendications précédentes, caractérisé en ce que des balais frotteurs (8) sont fixés sur la plaque de support (25).

13. Ensemble selon l'une des revendications précédentes, caractérisé en ce que le boîtier de soutien (59) comporte une étanchéité aux emplacements de contact entre le carter de moteur (1) et le carter de pompe (2).

14. Ensemble selon au moins l'une des revendications précédentes, caractérisé en ce que le boîtier de soutien (59) est pourvu d'une partie en saillie (67) qui entoure le palier principal (15) sur sa périphérie extérieure.

15. Ensemble selon la revendication 11, caractérisé en ce que le boîtier de soutien (59) est constitué d'une pièce moulée par injection en matière plastique, à paroi mince et réalisée sous forme de cage, qui forme avec le flasque de palier (25) un ensemble unitaire homogène.

16. Ensemble selon la revendication 15, caractérisé en ce que des manchons métalliques (64) sont encastrés dans le boîtier de soutien (59) dans la partie de maintien des paliers (15, 19).

17. Ensemble selon la revendication 9, caractérisé en ce que le boîtier de soutien (59) est constitué d'une pièce en tôle mince, réalisée par un procédé d'emboutissage ou de matriçage, qui est serrée, avec la plaque de support (54) isolée, entre le carter de moteur (1) et le carter de pompe (2).

18. Ensemble selon l'une des revendications 9 à 14, caractérisé en ce que la partie de maintien servant à recevoir le palier principal (15) est pourvue de crochets d'encliquetage (58), des parties découpées (69) étant prévues à cet effet dans le boîtier de soutien (59).

19. Ensemble selon l'une des revendications précédentes, caractérisé en ce que le flasque de palier (25) comporte une ouverture (78) dont le diamètre intérieur est inférieur au diamètre extérieur du palier principal (15) et en ce que le flasque de palier (25) est disposé entre le palier principal (15) et le carter de moteur électrique (1).

20. Ensemble selon la revendication 19, caractérisé en ce que le flasque de palier (25) est pourvu, dans la zone de l'ouverture (78), d'un évidement (17) sur lequel s'appuie la surface frontale de la bague extérieure de palier (16) du palier principal (15).

21. Ensemble selon la revendication 19 ou 20, caractérisé en ce qu'une rondelle-entretoise (82) est appliquée sur la surface frontale de la bague extérieure de palier (16) située à l'opposé du flasque de palier (25), la rondelle-entretoise coopérant avec la surface frontale, située à l'opposé du palier principal (15), d'un alésage étagé (deuxième partie étagée 83) pratiqué dans le carter de pompe (2).

22. Ensemble selon la revendication 21, caractérisé en ce que la rondelle-entretoise (82) coopère, par un collet réalisé au formage sur son contour extérieur, avec la bague extérieure de palier (16) du palier principal (15) et en ce que le diamètre intérieur de la rondelle-entretoise (82) est approximativement égal au diamètre de l'arbre.

23. Ensemble selon l'une des revendications précédentes, caractérisé en ce qu'un perçage (84) débouche suivant la direction circonférentielle sur l'alésage étagé pratiqué dans le carter de pompe (2), le perçage (84) venant en recouvrement vis-à-vis de la bague extérieure de palier (16).

24. Ensemble selon la revendication 1, caractérisé en ce que l'extrémité de l'arbre (4) opposée au côté d'entraînement ou de sortie est exempte de forces de palier, en ce que le montage à palier du côté d'entraînement ou de sortie de l'arbre (4) est disposé dans le carter de pompe (2) et en ce qu'une plaque de support (54) est serrée entre le carter de moteur électrique (1) et le carter de pompe (2).

25. Ensemble selon la revendication 2, caractérisé en ce que la plaque de support (54) forme une étanchéité aux emplacements de contact entre le carter de moteur électrique (1) et le carter de pompe (2).

26. Ensemble selon la revendication 24, caractérisé en ce que le carter de pompe (2) est pourvu d'un alésage traversant (92) qui reçoit des composants de raccordement électrique (90).

27. Ensemble selon la revendication 26, caractérisé en ce que la machine électrique est formée d'un moteur électrique servant à entraîner une pompe (63) à pistons radiaux disposée dans le carter de pompe (2) et en ce que le composant de raccordement électrique (90) du moteur électrique est raccordé à un bloc électronique de commande et de régulation (95) servant d'alimentation en énergie.
